# EUROPÄISCHE PATENTSCHRIFT

(11) **EP 0 893 057 B1**
(45) Veröffentlichungstag und Bekanntmachung des Hinweises auf die Patenterteilung: **18.09.2002**
(21) Anmeldenummer: 97112680.0
(22) Anmeldetag: 24.07.1997
(51) Int. Cl.: A01L 5/00

(54) **Offener Hufbeschlag aus Kunststoff**
Open plastic horseshoe
Fer à cheval ouvert en matériel synthétique

(43) Veröffentlichungstag der Anmeldung: 27.01.1999
(73) Patentinhaber: Fischlein, Helmut, 36251 Ludwigsau-Hainrode (DE)
(72) Erfinder: Fischlein, Helmut, 36251 Ludwigsau-Hainrode (DE)
(74) Vertreter: WALTHER, WALTHER & HINZ Patentanwälte

(56) Entgegenhaltungen:
- EP-A- 0 013 934
- DE-C- 97 536
- DE-C- 533 729
- GB-A- 2 262 425
- US-A- 3 519 079

## Beschreibung

Die Erfindung betrifft einen offenen Hufbeschlag aus Kunststoff, umfassend zwei Schenkel, die im Strahlbereich zueinander beabstandet sind, wobei zur Anpassung an die Größes des Hufes Mittel zur Veränderung des Abstandes der beiden Schenkel zueinander vorgesehen sind.

Der Huf eines Pferdes ist bekanntermaßen leicht oval geformt, wobei im hinteren Bereich des Hufes der Huf abgeflacht ausgebildet ist. In Bezug auf die Oberfläche des Hufes unterscheidet man den sogenannten Tragrand und die Sohle, wobei sich zwischen Tragrand und Sohle die sogenannte "weiße Linie" befindet. Diese weiße Linie ist zwischen 2 und 4 mm breit und erstreckt sich entsprechend der äußeren Kontur des Hufes über den gesamten Umfang des Hufes. Diese weiße Linie ist der einzige Bereich im Huf, der für die Aufnahme von Hufnägeln geeignet ist. Der hintere Bereich des Hufes wird als Strahl bezeichnet; dieser Bereich ist verhältnismäßig weich und auch gut durchblutet.

Es sind nun vom Grundsatz her zwei unterschiedliche Hufbeschläge bekannt. So ist zum einen ein Hufbeschlag bekannt, der im hinteren Bereich seiner Schenkel durch einen Steg verbunden ist (G 94 03 500). Darüber hinaus sind allerdings auch Hufbeschläge bekannt, die im hinteren Bereich offen sind (WO 94/22296).

Aus dem DE 296 13 691 ist darüberhinaus ein geschlossener Hufbeschlag bekannt, der aus zwei Schichten besteht, nämlich einer Oberschicht und einer die Laufseite bildenden Unterschicht. Die beiden Schichten sind allerdings als Einheit untrennbar miteinander verbunden. Bei diesem Hufbeschlag nach der Lehre des Gebrauchsmusters ist auf Grund des 2-schichtigen Laminataufbaues nur ein kompletter Austausch des Hufbeschlages möglich.

Aus der US-A 3,519,079 Literaturstelle ist ein offener Hufbeschlag bekannt, der zur Veränderung des Abstandes der beiden Schenkel des Hufes einen Steg aufweist.

Nachteilig an dem bekannten Stand der Technik ist allerdings, dass nach Abnutzung des Hufbeschlages das Pferd mit einem vollständig neuen Beschlag beschlagen werden muss.

Hierzu ist es erforderlich, dass in den Huf des Pferdes jedesmal dann, wenn das Pferd erneut beschlagen wird, Nägel an entsprechend anderer Stelle eingetrieben werden müssen. Hierunter leidet naturgemäß der Huf des Pferdes.

Der Erfindung liegt daher die Aufgabe zu Grunde, einen Hufbeschlag der eingangs genannten Art derart weiterzubilden, dass ein abgenutzter Hufbeschlag ausgetauscht werden kann, ohne dass der Huf des Pferdes hierbei beschädigt wird.

Die Aufgabe wird erfindungsgemäß dadurch gelöst, dass der Hufbeschlag einen unmittelbar am Huf anbringbaren Basisbeschlag aufweist, wobei der Basisbeschlag einen Laufbeschlag lösbar aufnimmt.

Mit einem derartigen zweiteiligen Hufbeschlag wird erreicht, daß bei abgenutztem Laufbeschlag nicht mehr der ganze Hufbeschlag abgenommen werden muß, sondern lediglich der Laufbeschlag. Hierdurch wird der Huf des Pferdes geschont, da nicht ständig neue Nägel in den Huf - und hier insbesondere in die weiße Linie des Hufes - eingeschlagen werden müssen. Ein solcher Hufbeschlag bietet sich daher insbesondere dort an, wo der Hufbeschlag einem hohen Verschleiß unterworfen ist. Beispielsweise durch entsprechende Steckverbindungen ist hierbei der Laufbeschlag lösbar mit dem Basisbeschlag verbindbar. Dies eröffnet die Möglichkeit, den Laufbeschlag ohne große Zeitverzögerungen austauschen zu können. Dies ist insbesondere dann von Wichtigkeit, wenn die Pferde im Wettkampf stehen, und aufgrund von sich ändernden Bodenverhältnissen beispielsweise ein grobstolliger Laufbeschlag aufgebracht werden soll.

Im einzelnen ist weiterhin vorgesehen, daß das Mittel zur Veränderung des Abstandes der beiden Schenkel zueinander als stegförmiges Verbindungsmittel ausgebildet ist, das durch die Schenkel des Basisbeschlages aufnehmbar ist. Durch ein derartiges, als Steg ausgebildetes Verbindungsmittel, das ähnlich dem Material des Hufbeschlages, eine entsprechende Steifigkeit und Festigkeit aufweist, kann nicht nur der Abstand der Schenkel des Beschlages zueinander variiert werden, sondern es wird auch der Strahlbereich des Hufes des Pferdes geschützt.

Nach einer besonderen Ausführungsform ist vorgesehen, daß das stegförmige Verbindungsmittel im Strahlbereich an einem Schenkel angeordnet ist und mit dem anderen Schenkel verbindbar ist. Das heißt, daß das stegförmige Verbindungsmittel nach Art einer Lasche ausgebildet ist, wobei in Abhängigkeit des gewünschten Abstandes der beiden Schenkel zueinander die Länge der Lasche bestimmt wird, um dann den überstehenden Teil abzuschneiden, und das lose Ende der Lasche stufenlos, beispielsweise mittels Schrauben, Kleben oder Verschweißen mit dem anderen Schenkel zu verbinden.

Eine weitere vorteilhafte Variante zeichnet sich dadurch aus, daß das stegförmige Verbindungsmittel zweiteilig ausgebildet ist, wobei jeder Schenkel ein Stegteil aufweist, wobei die Stegteile durch Verbindungsmittel, z. B. Schrauben miteinander in Verbindung bringbar sind. Hierbei können die Stegteile zueinander verschieblich gelagert sein. Die Schrauben können hierbei von unten zugänglich sein, wodurch die Möglichkeit eröffnet wird, zum Abbau von Spannungen im Huf den Steg zu lösen und dann wieder die Schraube anzuziehen, ohne das der Beschlag abgenommen werden muß.

Eine weitere Ausführungsform zeichnet sich dadurch aus, daß das stegförmige Verbindungsmittel als vorgefertigtes Teil mit den beiden Schenkeln im Strahlbereich des Hufes verbindbar ist. Die Verbindung kann hierbei ebenfalls durch Kleben, Schrauben, Klemmen oder Nieten erfolgen.

Nach einem vorteilhaften Merkmal ist weiterhin vorgesehen, daß das stegförmige Verbindungsmittel zur Lauffläche des Beschlages beabstandet an den Schenkeln des Beschlages unter dem Strahlbereich anbringbar ist. Hieraus folgt, daß der Steg nicht unmittelbar mit dem Boden in Verbindung kommt, was eine bessere seitliche Führung des Pferdehufes bewirkt, da eine geringere Aufstandsfläche und somit eine höhere Flächenpressung zur Verfügung steht. Ein weiterer Vorteil eines solchen von der Lauffläche beabstandeten Steges besteht darin, daß hierdurch die Gefahr von Strahlquetschungen vermindert wird. Denn es besteht bei einem durchgehenden Steg, der sich unmittelbar flächig an die Lauffläche des Hufbeschlages anschließt, immer die Gefahr, daß sich der Steg in diesem Bereich - insbesondere bei unebenem Gelände - dauerhaft verformt und Druck auf den Strahl des Hufes ausübt. Dies wiederum führt zu einer Schädigung des Hufes.

Nach einem weiteren Merkmal der Erfindung ist vorgesehen, daß der Hufbeschlag im vorderen Bereich über seine Höhe abgewinkelt ist. Es ist bekannt, daß durch die sogenannte Abschwungreibung beim Lauf des Pferdes der vordere Hufschutzbereich am stärksten beansprucht wird, und daß die bisher bekannten Kunststoffbeschläge genau an dieser Stelle eine Materialschwächung insofern zeigen, als der vordere Bereich des Hufbeschlages nach oben abgewinkelt ist, damit der Huf besser abrollen kann. Nachteilig hieran ist jedoch die schnellere Abnutzung aufgrund der Materialschwächung, so daß das Pferd noch schneller auf seinem Horn läuft und dieses abnutzt. Durch ein Abkanten des gesamten Hufbeschlages im vorderen Bereich, das heißt, über die gesamte Dicke des Hufbeschlages, wird erreicht, daß nach wie vor der Huf des Pferdes abrollen kann, ohne daß jedoch hierbei eine Materialschwächung mit einhergeht. Es ist lediglich erforderlich, daß der Huf des Pferdes an das in diesem Bereich des Hufes winklig ausgebildete Beschlagbett angepaßt wird.

Anhand der Zeichnungen wird die Erfindung nachstehend beispielhaft näher erläutert.
- Figur 1: zeigt einen Hufbeschlag in einer Ansicht von oben;
- Figur 2: zeigt eine Seitenansicht des Hufbeschlages gemäß Figur1;
- Figur 3 - 6: zeigen unterschiedliche stegförmige Verbindungsmittel;
- Figur 7: zeigt eine weitere Ausführungsform eines Hufbeschlages in einer Ansicht von oben;
- Figur 8: zeigt eine Ansicht gemäß der Linie VIII - VIII aus Figur 7;
- Figur 8a, 8b: zeigen eine weitere Ausführungsform eines Hufbeschlages mit zwei Stegteilen, die ineinander verschieblich und durch eine Schraube miteinander verbindbar sind;
- Figur 9, 10: zeigen einen zweiteiligen Hufbeschlag, bestehend aus Laufbeschlag (Fig. 9) und Basisbeschlag (Fig. 10);
- Figur 11: zeigt eine Seitenansicht auf einen derartigen zweiteiligen Hufbeschlag;

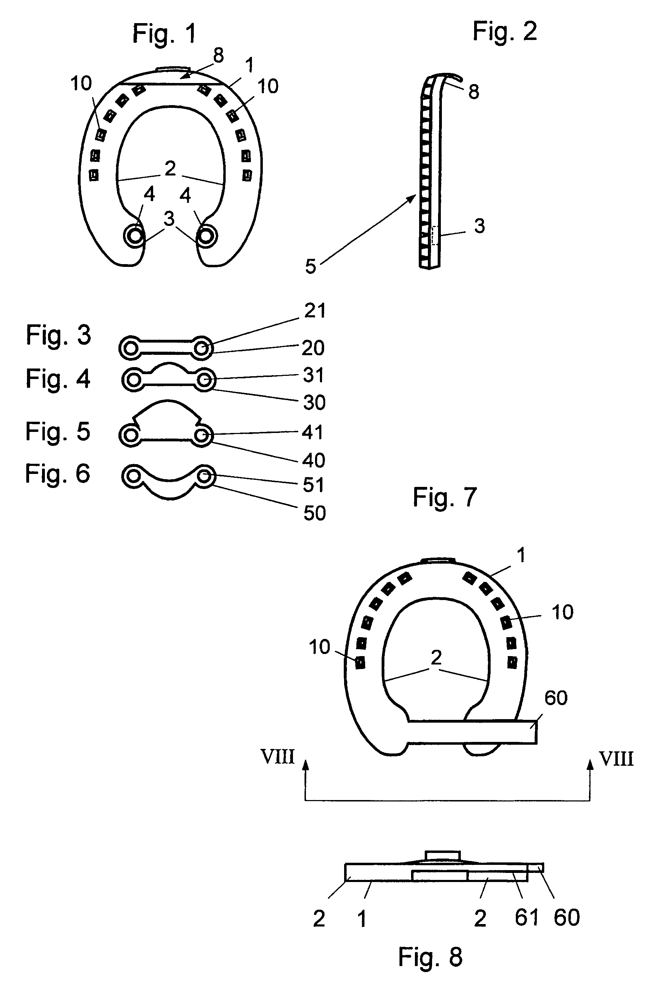

Figur 1 zeigt den insgesamt mit 1 bezeichneten Hufbeschlag; dieser Hufbeschlag 1 weist zwei Lochreihen 10 zur Aufnahme von Hufnägeln auf. Diese Lochreihen 10 sind in den Schenkeln 2 des Hufbeschlages angeordnet. Im Endbereich der Schenkel 2 befinden sich Aussparungen 3 zur Aufnahme der in den Figuren 3 bis 6 dargestellten unterschiedlichen Stege 20, 30, 40, 50. Die Verbindung der Stege an den Schenkeln 2 erfolgt im vorliegenden Fall durch Verschraubungen, weshalb die Aussparungen 3 entsprechende Gewindebohrungen 4 aufweisen. Die Aussparungen sind erforderlich, um den Steg in gleicher Höhe mit der Oberseite des Beschlages abschließen zu lassen. Korrespondierend zu den Bohrungen in den Schenkeln besitzen die Stege 20 bis 50 ebenfalls Bohrungen 21 bis 51. Wie insbesondere aus den Figuren 3 bis 6 erkennbar, sind unterschiedliche Stegformen denkbar. So ist der Steg 20 gemäß Figur 3 ebenso wie die Stege 30, 40 äußerst starr, das heißt, es findet im wesentlichen keinerlei Verformung statt, wenn die beiden Schenkel 2 durch einen derartigen Steg miteinander vebunden sind. Ganz anders verhält sich die Sachlage bei der Verwendung eines Steges gemäß Figur 6, der aufgrund seiner Wölbung eine gewisse Elastizität in Längsrichtung bereitzustellen vermag. Darüber hinaus zeigen die Stege gemäß den Figuren 4 und 5 eine relativ große Fläche, was bewirkt, daß der Strahlbereich des Hufes bei der Verwendung eines derartigen Steges 30, 40 über eine relativ große Fläche geschützt ist. Wie sich insbesondere aus Figur 2 ergibt, befindet sich der Steg im oberen Bereich, das heißt, beabstandet zur Lauffläche 5 des Hufbeschlages. Dies hat zur Folge, daß der Steg zur Unterseite der Lauffläche beabstandet ist, was bewirkt, daß aufgrund der geringeren Aufstandsfläche die Flächenpressung höher ist als wenn der Steg auf seiner Unterseite auf gleicher Höhe mit der Lauffläche 5 verlaufen würde.

Zur Anpassung des Hufbeschlages 1 an den Huf wird nun derart vorgegangen, daß zunächst geprüft wird, ob die vorhandene Lochreihe 10 mit der weißen Linie (Figur 18) zur Deckung kommt. Ist dies nicht vollständig der Fall, dann kann in Abhängikeit davon, ob die Lochreihe zu weit außen oder zu weit innen zu der weißen Linie sitzt, der Hufbeschlag zusammengepreßt oder aber geweitet werden. Dies ist in beiden Fällen durch eine Variation in der Länge des Steges gemäß den Figuren 3 bis 6 möglich. Hieraus wird deutlich, daß die Stege in verschiedenen Längen verfügbar sind. Gleiches gilt vom Prinzip auch beim Verkleben des Beschlages mit dem Huf, um den Beschlag in Bezug auf die Außenkontur mit dem Huf zur Deckung zu bringen.

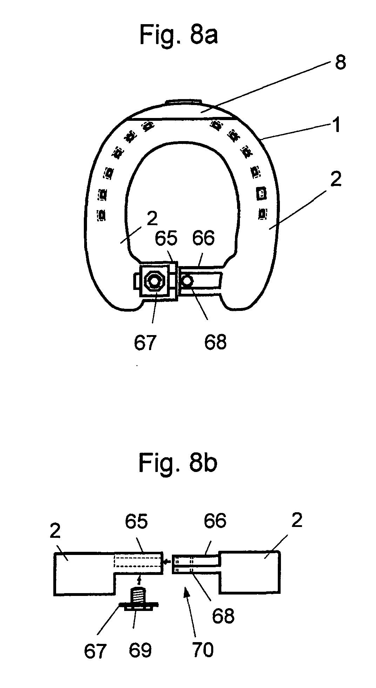

Bei der Ausführungsform gemäß den Figuren 7 und 8 ist anstelle eines gesonderten Steges ein stegförmiges Verbindungsmittel 60 in Form einer an den einem Schenkel 2 angeordneten Lasche vorgesehen, wobei hierbei die Anpassung dadurch erfolgt, daß der Hufbeschlag mit seinem einen freien Schenkel lediglich in der gewünschten Stelle mit der Lasche 60 verbunden wird, so daß die Lochreihen 10 mit der weißen Linie des Hufes zur Deckung gelangen. Die Lasche 60 liegt hierbei im Bereich des einen Schenkels 2 in einer Nut 61 ein, so daß sich eine nach oben, das heißt zur Huffläche hin plane Oberfläche ergibt. Denkbar ist hierbei natürlich, daß diese Lasche ähnliche Formen aufweist wie die Stege gemäß den Figuren 3 bis 6.

Bei der Ausführungsform gemäß den Figuren 8a, 8b zeigt jeder der Schenkel 2 ein Stegteil 65, 66, die ineinander mit einer T-Nut verschieblich gelagert sind. In dem einen Stegteil 65 befindet sich eine Unterlegscheibe 67 für die Schraube 69, wobei das andere Stegteil 66 eine Gewindebohrung 68 für die Schraube 69 zeigt. Die Stegteile 65, 66 sind hierbei beabstandet (Pfeil 70) zur Lauffläche des Beschlages an den Schenkeln 2 angebracht, so daß auch die Schraube 69 nicht abgenutzt wird.
Des Weiteren ist vorgesehen, daß der Hufbeschlag im vorderen Bereich, das heißt im Zehenbereich, nach oben abgewinkelt ist (Pfeil 8). Die Abwinkelung erfolgt hierbei ohne eine Verminderung der Materialstärke, um einem vorzeitigen Verschleiß des Beschlages entgegenzuwirken (Fig. 1, Fig. 2).

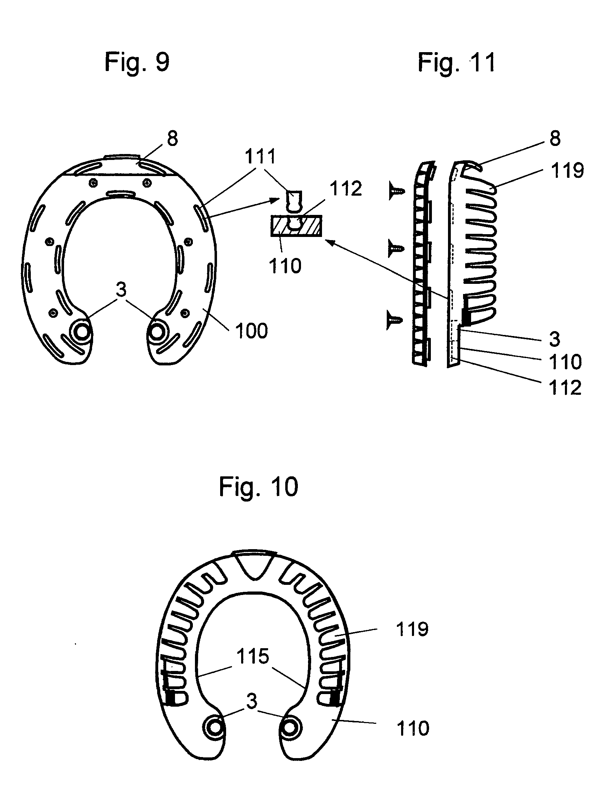

Bei der Ausführungsform eines Hufbeschlages gemäß den Figuren 9 bis 11 ist ein zweigeteilter Hufbeschlag erkennbar. Figur 9 zeigt hierbei eine Ansicht von oben auf den Laufbeschlag 100, der durch den Basisbeschlag 110 aufgenommen wird. Zur Aufnahme und Fixierung des Laufbeschlages 100 durch den Basisbeschlag 110 sind Klemmmittel 111 vorgesehen, die rastend klemmbar von entsprechenden Ausnehmungen 112 in dem Basisbeschlag 110 aufnehmbar sind. Der Basisbeschlag 110 selbst kann in bekannter Weise durch Hufnägel an dem Huf befestigen werden. Insofern kann dieser Basisbeschlag 110 demzufolge in seinen Schenkeln 115 Lochreihen wie bei der Ausführungsform gemäß Figur 1 zeigen, und im Endbereich der Schenkel 115 Aufnahmen 3 für die Stege gemäß den Figuren 3 bis 6 aufweisen. Die Anordnung der Stege korrespondiert hierbei zu der zuvor beschriebenen Art der Befestigung (Figur 1 bis Figur 6). Auch der Laufbeschlag 100 ist endseitig mit Aufnahmen 3 für Stege 20 bis 50 versehen, um auch bei dem Laufbeschlag eine Anpassung an den Basisbeschlag vornehmen zu können.

Bei der dargestellten Variante zum Verkleben des Basisbeschlages (Figur 10) mit dem Huf, zeigt der Beschlag seitlich aufstehende Laschen 119, die sich über einen wesentlichen Teil des Umfanges des Hufes erstrecken. Diese Laschen werden mit der Hufwand verklebt.

## Patentansprüche

1. Offener Hufbeschlag aus Kunststoff, umfassend zwei Schenkel, die im Strahlbereich zueinander beabstandet sind, wobei zur Anpassung an die Größe des Hufes Mittel zur Veränderung des Abstandes der beiden Schenkel (2, 115, 211) zueinander vorgesehen sind,
**dadurch gekennzeichnet,**
**dass** der Hufbeschlag einen unmittelbar am Huf anbringbaren Basisbeschlag (110) aufweist, wobei der Basisbeschlag (110) einen Laufbeschlag (100) lösbar aufnimmt.

2. Hufbeschlag nach Anspruch 1,
**dadurch gekennzeichnet,**
**dass** das Mittel zur Veränderung des Abstandes als stegförmiges Verbindungsmittel (20 bis 50, 60) ausgebildet ist.

3. Hufbeschlag nach Anspruch 2,
**dadurch gekennzeichnet,**
**dass** das stegförmige Verbindungsmittel (20 bis 50, 60) durch die Schenkel (2, 115) des Basisbeschlages (110) aufnehmbar ist.

4. Hufbeschlag nach Anspruch 2,
**dadurch gekennzeichnet,**
**dass** das stegförmige Verbindungsmittel (20 bis 50, 60) durch die Schenkel (2, 115) des Basisbeschlages (110) und des Laufbeschlages (100) aufnehmbar ist.

5. Hufbeschlag nach Anspruch 2,
**dadurch gekennzeichnet,**
**dass** das stegförmige Verbindungsmittel im Strahlbereich an einen Schenkel (2) angeordnet ist, und mit dem anderen Schenkel verbindbar ist.

6. Hufbeschlag nach Anspruch 2,
**dadurch gekennzeichnet,**
**dass** das stegförmige Verbindungsmittel (20 bis 50) als vorgefertigtes Teil mit den beiden Schenkeln (2, 115) im Strahlbereich verbindbar ist.

7. Hufbeschlag nach einem der voranstehenden Ansprüche
**dadurch gekennzeichnet,**
**dass** das stegförmige Verbindungsmittel (20 bis 50, 60) zur Lauffläche des Beschlages beabstandet an den Schenkeln (2, 115) des Beschlages unter dem Strahlbereich anbringbar ist.

8. Hufbeschlag nach einem der voranstehenden Ansprüche
**dadurch gekennzeichnet,**
**dass** der Hufbeschlag im vorderen Bereich (Pfeil 8) über seine Höhe abgewinkelt ist.

9. Hufbeschlag nach einem der voranstehenden Ansprüche
**dadurch gekennzeichnet,**
**dass** das stegförmige Verbindungsmittel zweiteilig ( 65, 66) ausgebildet ist, wobei jeder Schenkel ein Stegteil aufweist, wobei die Stegteile (65, 66) durch Verbindungsmittel, z. B. Schrauben, miteinander in Verbindung bringbar sind.

10. Hufbeschlag nach Anspruch 9,
**dadurch gekennzeichnet,**
**dass** die Stegteile (65, 66) ineinander verschieblich sind.

## Claims

1. An open horseshoe made of plastic material comprising two branches that are spaced apart in the region of the frog, means for modifying the distance between the two branches (2, 115, 211) being provided for the purpose of adjusting the horseshoe to the size of the hoof
**characterized in that**
the horseshoe is provided with a base shoe (110) that is directly attachable to the hoof, said base shoe (110) detachably receiving a tread shoe (100).

2. The horseshoe according to claim 1,
**characterized in that**
the means for modifying the spacing is designed as a bridge-shaped connecting means (20 through 50, 60).

3. The horseshoe according to claim 2,
**characterized in that**
the bridge-shaped connecting means (20 through 50, 60) is receivable by the branches (2, 115) of the base shoe (110).

4. The horseshoe according to claim 2,
**characterized in that**
the bridge-shaped connecting means (20 through 50, 60) is receivable by the branches (2, 115) of the base shoe (110) and of the tread shoe (100).

5. The horseshoe according to claim 2,
**characterized in that**
the bridge-shaped connecting means is arranged on a branch (2) in the region of the frog and is joinable to the other branch.

6. The horseshoe according to claim 2,
**characterized in that**
the bridge-shaped connecting means (20 through 50), which is a prefabricated part, is joinable to the two branches (2, 115) in the frog region.

7. The horseshoe according to one of the afore mentioned claims,
**characterized in that**
the bridge-shaped connecting means (20 through 50, 60) is attachable to the branches (2, 115) of the shoe below the frog region at a distance from the tread of the shoe.

8. The horseshoe according to one of the afore mentioned claims,
**characterized in that**
the horseshoe is bent over its height in the front region (arrow 8) thereof.

9. The horseshoe according to one of the afore mentioned claims,
**characterized in that**
the bridge-shaped connecting means is bipartite (65, 66), each branch being provided with a bridge portion, the bridge portions (65, 66) being capable of being joined together by means of connecting means such as screws for example.

10. The horseshoe according to claim 9,
**characterized in that**
the bridge portions (65, 66) are slidable into one another.

## Revendications

1. Fer à cheval ouvert en matière plastique comprenant deux branches espacées dans la région de la fourchette, des moyens destinés à modifier l'écart entre les deux branches (2, 115, 211) étant prévus pour ajuster le fer à la taille du pied,
**caractérisé en ce que**
le fer à cheval est pourvu d'un fer de base (110) destiné à être directement appliqué au sabot, ledit fer de base (110) recevant de manière amovible un fer inférieur (100).

2. Fer à cheval selon la revendication 1,
**caractérisé en ce que**
le moyen destiné à modifier l'écartement est réalisé sous forme de moyen de liaison en forme de baguette (20 à 50, 60).

3. Fer à cheval selon la revendication 2,
**caractérisé en ce que**
le moyen de liaison en forme de baguette (20 à 50, 60) est destiné à être reçu par les branches (2, 115) du fer de base (110).

4. Fer à cheval selon la revendication 2,
**caractérisé en ce que**
le moyen de liaison en forme de baguette (20 à 50, 60) est destiné à être reçu par les branches (2, 115) du fer de base (110) et du fer inférieur (100).

5. Fer à cheval selon la revendication 2,
**caractérisé en ce que**
le moyen de liaison en forme de baguette est disposé sur une branche (2) dans la région de la fourchette et est destiné à être relié à l'autre branche.

6. Fer à cheval selon la revendication 2,
**caractérisé en ce que**
le moyen de liaison en forme de baguette (20 à 50) est une pièce préfabriquée destinée à être reliée aux deux branches (2, 115) dans la région de la fourchette.

7. Fer à cheval selon l'une des revendications précédentes,
**caractérisé en ce que**
le moyen de liaison en forme de baguette (20 à 50, 60) est destiné à être appliqué aux branches (2, 115) du fer en dessous de la fourchette à quelque distance de la face inférieure du fer.

8. Fer à cheval selon l'une des revendications précédentes,
**caractérisé en ce que**
le fer à cheval est relevé sur sa hauteur dans sa partie avant (flèche 8).

9. Fer à cheval selon l'une des revendications précédentes,
**caractérisé en ce que**
le moyen de liaison en forme de baguette est constitué de deux parties (65, 66), chacune des branches étant pourvue d'une partie de baguette, les parties de baguette (65, 66) étant destinées à être assemblées par des moyens de liaison, des vis par exemple.

10. Fer à cheval selon la revendication 9,
**caractérisé en ce que**
les parties de baguette (65, 66) sont destinées à coulisser l'une dans l'autre.
